# EUROPEAN PATENT APPLICATION

(11) **EP 4 513 858 A1**
(43) Date of publication of application: **26.02.2025**
(21) Application number: 23193240.1
(22) Date of filing: 24.08.2023
(51) Int. Cl.: H04L 67/12, H04L 43/00, H04L 69/40, H04W 4/44, H04W 4/46

(54) **METHOD AND SYSTEM FOR PROVIDING REDUNDANCY FOR TELEMATIC UNITS**

(71) Applicant: KNORR-BREMSE Systeme für Nutzfahrzeuge GmbH, 80809 München (DE)
(72) Inventor: NEMETH, Huba, 1116 Budapest (HU); DUDAS, Zsolt, 6728 Szeged (HU); SZÖLLOSI, Adam, 1119 Budapest (HU); BATAI, Andras, 7623 Pecs (HU); ZÖLDHEGYI, Valter, 2049 Diósd (HU); SZOKOL, Tamas, 1112 Budapest (HU); KOMLOS, Tamas, 6448 Csavoly (HU); MERZA, Valér, 2000 Szentendre (HU); GYURKÓ, Zoltán, 1047 Budapest (HU)

(57) **Abstract**

A method for providing redundancy for telematic units (110, 120) of a vehicle combination is disclosed. The vehicle combination includes a first vehicle (100) and a second vehicle (200), wherein the first vehicle (100) includes a first telematic unit (110) and the second vehicle (200) includes a second telematic unit (210). The method includes forwarding (S110), by the first telematic unit (110), first vehicle operational data (115) of the first vehicle (100) to an external entity (50); and forwarding (S120), by the first data telematic unit (110), second vehicle operational data (215) of the second vehicle (200) to an external entity (50).

## Description

The present invention relates to a method and a system for providing redundant telematic units which ensures a redundant gatewaying, in particular during automated driving, of a vehicle combination, and, in particular, to a telematic unit of a vehicle as redundancy option for another vehicle's telematic unit in a vehicle combination.

Telematic units (TUs) are part of vehicles and are used for many functions such as: a central data gateway of the vehicle, for tracking of the vehicle, as warning system, and as data protection for rescue services. Data from the vehicle are communicated through the TU as gateway towards external entities (e.g., a cloud). The vehicle tracking function provided by the TU may include geolocation services (e.g., geofencing). Moreover, the TU may provide tour analysis and monitoring systems (e.g., continuous vehicle status, health, and condition monitoring) or fleet management systems. Thus, the TUs as part of a whole telematics system provide intelligent connectivity and fast diagnosis of various components of the vehicle, and, finally, optimize processes and improves transport safety.

In conventional vehicles, the telematic units are unique devices on a vehicle or a vehicle combination. If a failure occurs, the respective functions are not available. In case of a human driven vehicle the failure of such the telematic unit leads only to a reduced functionality of the vehicle and may thus be tolerable. However, for highly automated vehicles a failure of the telematic unit may cause the vehicle to be not operable anymore, which decreases the availability of the vehicle significantly.

Therefore, there is a need to increase the availability of the vehicle telematic units to maintain the operation, in particular of automated vehicles - even if a telematic unit does not operate properly.

At least some of the above-mentioned problems are overcome by a method for providing redundancy for vehicle telematic units according to claim 1 and a system for data forwarding according to claim 7. This system may be or may include a telematic unit. The dependent claims refer to specifically advantageous realizations of the subject matter claimed by the independent claims.

The present invention relates to a method for providing redundancy for telematic units of a vehicle combination. The vehicle combination includes a first vehicle and a second vehicle, wherein the first vehicle includes a first telematic unit and the second vehicle includes a second telematic unit. The method includes:
- forwarding, by the first telematic unit, first vehicle operational data of the first vehicle to an external entity; and
- forwarding, by the first telematic unit, second vehicle operational data of the second vehicle to the external entity.

According to embodiments, the method may forward the data during automated driving operations (e.g., highly or fully). However, the method shall not be limited on the automated driving, because according to embodiments the data can also be forwarded when a driver drives the vehicle or at standstill.

Optionally, the method further includes:
- forwarding, by the second telematic unit, the second vehicle operational data of the second vehicle to the external entity; and
- forwarding, by the second telematic unit, the first vehicle operational data of the first vehicle to the external entity.

Therefore, both telematic units may forward the available data, also from the respective other vehicle. The method may also include a collecting of the forwarded data and the data collection may be implemented as a continuous process. According to embodiments, the data forwarding/collection can last for a predetermined period (e.g., as long as the vehicle combination is in an automated operation mode). Therefore, the combination of the two telematic units enables and maintains a redundant gatewaying system for data forwarding for the first vehicle and for the second vehicle. This has the advantage that - if one of the telematic units indicates a failure or an error - all needed data is still available at the external entity or at least in the respective other telematic unit.

Optionally, the method further includes:
- providing functions of the second telematic unit by the first telematic unit; or
- providing functions of the first telematic unit by the second telematic unit,
wherein the provided functions of the first telematic unit and/or of the second telematic unit are at least one of the following functions: providing a data gateway (e.g., as a router), supporting a tracking of the vehicle (e.g., by providing positional data), a vehicle tour analysis (e.g. past providing paths incl. time and speed values), a vehicle diagnosis, providing a warning system, providing data protection, or providing rescue service(s) (e.g. provide a position and last state of the vehicle).

Thus, the redundancy of embodiments does not only relate to the forwarding of data but also involves provisions for the functions provided by the respective telematic units. They, too, will be provided by the telematic unit without failure, when the other telematic unit indicates an error/failure. The vehicle operation data can be any kind of data that are associated with or needed for the provided functions. They may include positioning data, data that define a state or status of the vehicle, or data that can be used to resolve legal issues in case a traffic accident happens and other data. They may include data such as speed values, steering angles, and brake actuation as function of time, when and how a given maneuver has been performed, which objects were detected in the surrounding etc.

According to further embodiments the first and/or second telematic unit includes an integrated storage device (e.g., some kind of computer memory), but do not need to have an own data recorder for recording vehicle data during driving. However, the first and second telematic unit may be configured to access an available data recorder in the first and/or second vehicle to receive respective (recorded) vehicle operational data and to process the received vehicle operational data. The data recorder may keep vehicle operational data for a predetermined (longer) period (e.g., to detect a slowly deterioration of a vehicle function over hours or days). After processing the vehicle operational data, the first and second telematic unit(s) may write the processed data again on the data recorder or forward the processed data the external entity. The available data recorder may itself include communication interface to provide the recorded data to the external entity (e.g., via a wireless connection). According to further embodiments, the first and second telematic unit(s) may use the communication interface of an available data recorder as backup communication interface or as primary communication interface (e.g., for specific data).

According to further embodiments, there is no need that the first (second) telematic unit forwards the first vehicle operational data and the second vehicle operational data in parallel. The forwarding of the vehicle operational data of the respective other vehicle may only be performed when there is a need for this. Therefore, optionally, the method may further include:
- detecting a failure in one of the first and second telematic units; and
- only when the failure has been detected in the second telematic unit, forwarding the second vehicle operation data by the first telematic unit;
- only when the failure has been detected in the first telematic unit, forwarding the first vehicle operation data by the second telematic unit.

In other words, if no failure is detected the steps of forwarding the second/first vehicle operation data in the first/second telematic unit needs not to be performed. Only upon a failure detection a data collection in the other vehicle may be started (i.e., may be triggered by a failure event). For this, the step of detecting the failure, may include:
- ascertaining an absence of a keepalive signal or receiving of a failure signal or receiving of a status message indicating a malfunctioning; and
- collecting first or second vehicle operational data from the vehicle with the detected failure in the first and second telematic units by the telematic unit without a failure.
It should be understood that all kind of errors or malfunctioning (whether minor or severe) can be protocolled in log files and the detection of the failure can also be triggered by a respective entry in these log files. It is further understood that the detected failure may be only minor, i.e., the faulty telematic unit may still be operational - at least to some extent. But it may be of advantage to start forwarding data already when there is an increased risk of a complete failure at a later stage.

The first vehicle may include a first domain controller coupled to the first telematic unit and configured to collect and to forward first vehicle operational data. The second vehicle may include a second domain controller coupled to the second telematic unit and configured to collect and to forward second vehicle operational data. Then, optionally, the method comprises at least one of the following steps:
- exchanging the first vehicle operational data and/or the second vehicle operational data between by the first domain controller and the second domain controller utilizing a wireless or wired connection,
- exchanging the first vehicle operational data and/or the second vehicle operational data directly between by the first telematic unit and the second telematic unit utilizing a wireless or wired connection, or indirectly utilizing a communication interface between the first vehicle and the second vehicle,
- collecting the first vehicle operational data and the second vehicle operational data by the first domain controller or by the second domain controller if one of them indicates a failure.

A vehicle domain controller should be understood as a device controlling one or more functions of the vehicle in a particular area (or domain such as a chassis or a trailer). They are present in many vehicles and may have an integrated gate function for forwarding data. Therefore, there is a synergistic effect making use of the functionality already implemented by the domain controller.

Thus, according to embodiments, there is a double redundancy: with respect to the telematic units and with respect to the domain controllers. Therefore, when the telematic unit and the domain controller in a vehicle (truck or trailer) fail, the other vehicle in the vehicle combination (trailer or truck) can take over all functions provided by the faulty telematic unit and/or the faulty domain controller.

The first vehicle operational data may be collected from a plurality of first data sources. The second vehicle operational data may be collected from a plurality of second data sources. Then, optionally, the steps of collecting vehicle operational data by the first telematic unit and/or by the second telematic unit may include storing the collected vehicle operational data in a local storage device or at a remote storage device (e.g., cloud-based storage) utilizing a wired data link or a wireless data communication.

Embodiments relate also to a system for data forwarding of a first vehicle. The system includes a first telematic unit configured to forward first vehicle operational data of the first vehicle, wherein the first vehicle and a second vehicle form a vehicle combination. The system may further include a control unit configured:
- to control forwarding the first vehicle operational data of the first vehicle by the first telematic unit to an external entity; and
- to control forwarding the second vehicle operational data of a second vehicle by the first telematic unit to an external entity.

Optionally, the control unit is further configured:
- to detect a failure of a second telematic unit in the second vehicle;
- to control forwarding second vehicle operational data only upon detecting the failure.

A correctly operating second telematic unit may be configured to forward the second vehicle operational data of the second vehicle to the external entity.

According to embodiments, the system is itself the telematic unit. Therefore, further embodiments relate to a telematic unit of a first vehicle of a vehicle combination, where the vehicle combination includes the first vehicle and a second vehicle, and the second vehicle includes another telematic unit. The telematic unit is configured:
- to collect the first vehicle operational data of the first vehicle and to forward the first vehicle operational data to an external entity; and
- to collect and forward the second vehicle operational data of the second vehicle to the external entity.

Again, the first vehicle may comprise a first domain controller, and/or the second vehicle may comprise a second domain controller, wherein the first and second domain controllers are adapted to provide at least one function independent from forwarding vehicle operational data. Then, optionally, the first telematic unit and/or first control unit may be integrated in the first domain controller. Similarly, the second telematic unit and/or second control unit may be integrated in the second domain controller.

Optionally, the first vehicle is a towing vehicle (e.g., a truck) or a towed vehicle (e.g., a trailer). Accordingly, the second vehicle may be another towing vehicle (e.g., a truck) or another towed vehicle (e.g., a trailer).

Further embodiments relate to a vehicle combination with at least two coupled vehicles (such as truck and trailer). A system for data forwarding as described before may be implemented in one or both vehicles of the vehicle combination.

Optionally, the vehicle combination includes a communication interface for exchanging vehicle operational data collected by respective telematic units between both vehicles. The data exchange may be triggered by starting an automated operation of the vehicle combination or by detecting a failure in one of the telematic units. This again provides the advantage of a redundant data forwarding through a telematic unit, because both telematic units may forward both data - at all times or only when a failure has occurred.

The method may also be implemented in software or a computer program product. Therefore, embodiments can be implemented in any electronic control unit (ECU) of the vehicle or can be implemented by software or as a software module in an ECU. Therefore, embodiment relate also to a computer program product or a data storage device having program code for performing the method when the computer program is executed on a processor. For example, a computer-readable storage device with stored program code may cause the system to forward data as described before to carry out the method as described.

It is further understood that the order of steps may be different - as long as the desired effect is achieved.

Embodiments overcome the above-mentioned problems by providing a redundancy for an available vehicle telematic unit on a vehicle by a telematic unit of another vehicle. For example, a vehicle telematic unit of one vehicle can provide a redundancy option in case a telematic unit of another vehicle in a vehicle combination is faulty. The vehicle combination can refer to a combination of a truck and a trailer, wherein each of them, the truck, and the trailer, may include a separate vehicle telematic unit.

Some examples of the systems and/or methods will be described in the following by way of examples only, and with respect to the accompanying figures, in which:
- Fig. 1: depicts a vehicle telematic system according to an embodiment of the present invention;
- Fig. 2: depicts a system for data forwarding according to another embodiment;
- Fig. 3: depicts a system for data forwarding according to yet another embodiment;
- Fig. 4: depicts a system for data forwarding to yet another embodiment;
- Fig. 5: depicts a system for data forwarding according to yet another embodiment;
- Fig. 6: depicts schematically a flow chart for a method for data forwarding during automated driving of a vehicle combination according to an embodiment.

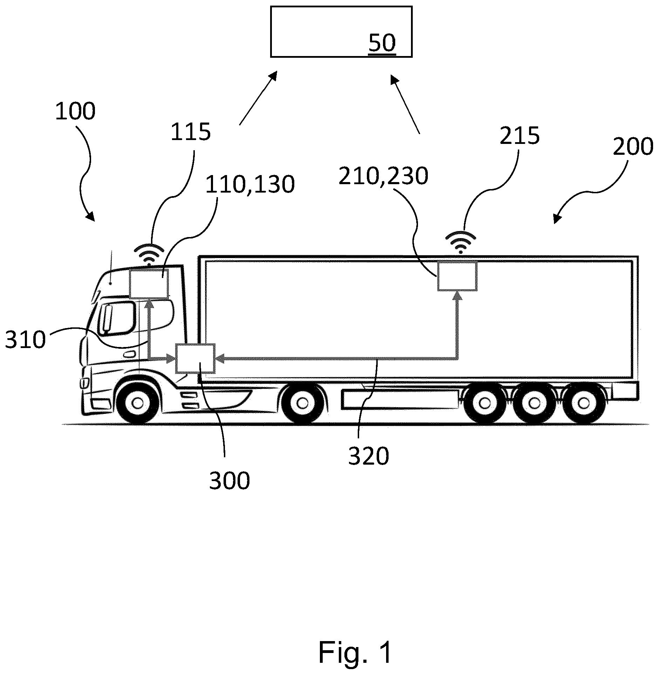

**Fig. 1** depicts a system of data forwarding (e.g., during automated driving) of a first vehicle 100 and a second vehicle 200 according to an embodiment. The first vehicle 100 may be a truck or a trailer, wherein in the following it will mostly be assumed that the first vehicle 100 is the truck. The second vehicle 200 may be another truck or another trailer, wherein in the following it will mostly be assumed the second vehicle 200 is the trailer. In other embodiments it is vice versa. The system includes a first telematic unit 110 configured to collect first vehicle operational data 115 of the first vehicle 100 and a control unit 130, which in the depicted embodiment is integrated in the first telematic unit 110 (e.g. share a same housing). The control unit 130 is configured:
- to control forwarding the first vehicle operational data 115 of the first vehicle 100 by the first telematic unit 110 to an external entity 50; and
- to control forwarding the second vehicle operational data 215 of a second vehicle 200 by the first telematic unit 110 to an external entity 50.

The control unit 130 may further be configured:
- to detect a failure of a second telematic unit 210 in the second vehicle 200; and
- to collect and forward the second vehicle operational data 215 of the second vehicle 200 upon the detection of the failure.

The failure may be a complete failure or only a partly failure or may be any kind of error.

A correctly operating second telematic unit 210 is configured to collect and forward the second vehicle operational data 215 (e.g., during automated driving) of the second vehicle 200. The first vehicle 100 and the second vehicle 200 form a vehicle combination.

Here and in the following, the vehicle combination may include at least two separable parts such as a truck with a trailer or more than two trailers. Therefore, the term "vehicle" does not necessarily refer to motor vehicle but may also include towed vehicles. All vehicles of the vehicle combination 100, 200 may have an own telematic unit 110, 210 and these telematic units 110, 210 are utilized, according to embodiments, to provide a redundancy option for each other telematic unit. For example, a vehicle telematic unit of a truck can provide a backup for vehicle telematic unit for the trailer and vice-versa.

According to this embodiment, the first vehicle 100 includes the first telematic unit 110 with its control unit 130. Likewise, the second vehicle 200 includes the second telematic unit 210 with its control unit 230. When no failure is present, the first telematic unit 110 collects and forwards (at least) the first vehicle operational data 115 and the second vehicle telematic unit 210 collects and forwards (at least) the second vehicle operational data 215. The first vehicle operational data 115 can be collected via a wireless or wired data connection. Similarly, the second vehicle operational data 215 can be collected via a wireless or wired data connection.

In addition, the first vehicle telematic unit 110 and the second vehicle telematic unit 210 may exchange data and information using data lines 310, 320 connecting the vehicle telematic unit 110, 210 with a communication interface 300. The communication interface 300 is configured to establish, for example, a wired communication, between the first vehicle 100 and the second vehicle 200, when the vehicle combination is built. According to further embodiments, the communicated information via the communication interface 300 can be customized. It may include textual data or video streams or images which are collected by one of the telematic units 110, 210, for example as part of a continuous surveillance operation to be performed for a fully automated vehicle driving.

Moreover, the communication between the first and second telematic unit 110, 210 may also include information or signals indicating a status of both telematic units 110, 210. Therefore, the state of each telematic unit 110, 210 may be shared with the other telematic unit 210, 110. This status or state information may be indicative of a fully operational telematic unit or may indicate an (minor) error or failure of one of the telematic units 110, 210 in which case the other, i.e., the flawlessly operating telematic unit, may take over the functions of the faulty or insufficient operating telematic unit.

According to embodiments, the telematic units 110, 210 may be set up on either vehicle 100, 200 as stand-alone devices, which may have integrated the control units 130, 230. The control units 130, 230 can be any data processing device that is able to perform the data processing for collecting and exchanging/forwarding of the data. In case of a correct operation, i.e., no failure has detected, the first and second telematic units 110, 210 provide the collected vehicle operational data 115, 215, for which a wireless communication protocol (for example WLAN or Wi-Fi) may be utilized. In addition, or alternatively to the possibly wireless exchange of vehicle operational data 115, 215, both telematic units 110, 210 may be connected partly or completely via a wired link (e.g., galvanic, optical, etc.) to exchange data and information.

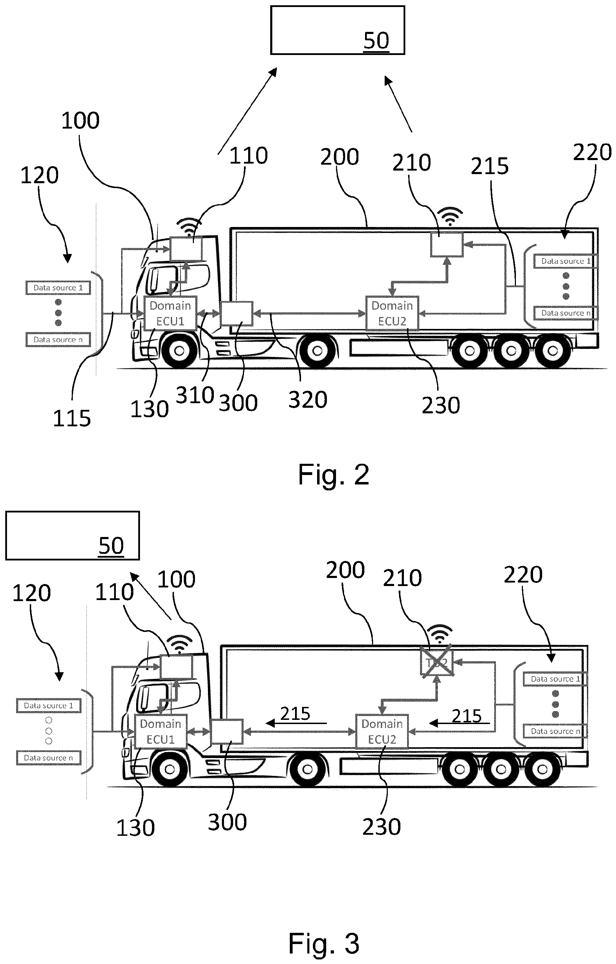

**Fig. 2** depicts a system for data forwarding according to another embodiment, where the first vehicle 100 comprises a first control unit 130 as a unit separate from the first telematic unit 110, which is operable to control at least part of the function of the first telematic unit 110. Similarly, the second vehicle 200 may include a separate second control unit 230 being configured to control at least some functions of the second telematic unit 210. In addition, according to this embodiment, a first domain controller 130 is utilized as first control unit 130, and a second domain controller 230 may be utilized as the second control unit 230.

The domain controller(s) 130, 230 are centralized electronic control units that control at least one vehicle function in a particular domain (area) of the vehicle(s) 100, 200. The domain controller(s) 130, 230 may already be configured to provide collecting and routing of data. Therefore, by implementing the first and second control unit 130, 230 in domain controllers, the first and second control unit 130, 230 are adapted to provide various control options, which are independent from the data forwarding, for the first or second vehicle 100, 200 in a respective domain of the vehicle(s) 100, 200.

It is of course understood that the first and second telematic unit 110, 210 may still have integrated data processing or control devices.

According to this embodiment, the first telematic unit 110 collects the first vehicle operational data 115 from a plurality of first data sources 120. The first data sources 120 may also provide the first vehicle operational data 115 to the first domain controller 130. Similarly, the second telematic unit 210 may be configured to collect the second vehicle operational data 215 from a second plurality of data sources 220. The collected data 215 from the second data sources 220 may also be forwarded to the second domain controller 230. Again, as in the previous embodiment, a communication interface 300 may be provided that enables a data and information exchange between the first domain controller 130 using the first data link 310 and to the second domain controller 230 using a second data link 320.

All other functions can be implemented as in the embodiments described before.

**Fig. 3** illustrates the situation that, for example, the second telematic unit 210 indicates a failure so that the second telematic unit 210 is no longer able to reliably collect and forward the second operational vehicle data 215 from the second plurality of data sources 220. This situation can be detected by the second domain controller 230. This detection may be achieved by detecting an absent of a keepalive signal which otherwise is continuously transmitted from the second telematic unit 210. Moreover, the second telematic unit 210 may also issue an error signal to the second domain controller 230 indicating an error in the second telematic unit 210.

In response to this detection of the failure of the second telematic unit 210, the second domain controller 230 is configured to forward the second vehicle operational data 215 from the second plurality of data sources 220 via the communication interface 300 to the first domain controller 130 which, in turn, triggers the collection of the second vehicle operational data 215 by the first telematic unit 110.

Therefore, it is a similar operation as implemented in the embodiment of Fig. 1, with the only difference that in the embodiments of Fig. 2 and Fig. 3 the control units 130, 230 are separate units for which already present units in the vehicle such as the domain controllers may be utilized. It is understood that the domain controllers provide also other functions, different from the data collection or forwarding by the telematic unit 110, 120. In contrast to the embodiment of Fig. 3, in Fig. 1 the first telematic unit 110 and the second telematic unit 210 include a processing unit that enables the forwarding of the collected second vehicle operational data 215 in case a failure occurred at the second telematic unit 210.

All other functions can be implemented as in the embodiments described before. For example, as in the previous embodiments, the collection of the vehicle operation data 115, 215 can be performed utilizing a wireless or a wired data link.

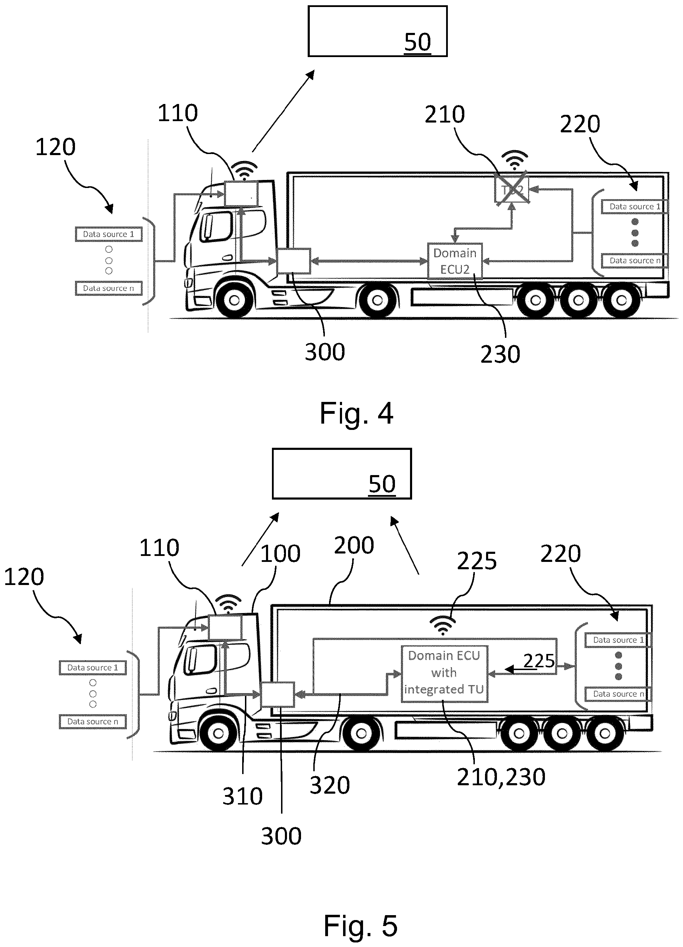

**Fig. 4** depicts a system of data forwarding according to yet another embodiment, where only the second vehicle 200 uses a domain controller 230 for controlling the data collection of the second vehicle operation data 215 by the first telematic unit 110. Again, the second domain controller 230 is a separate unit from the second telematic unit 210. On the other hand, the first vehicle 100 does not utilizes a separated domain controller for controlling the data collection and forwarding of the first vehicle operation data 115. Therefore, the first vehicle operational data 115 may be directly collected from the first plurality of data sources by the first telematic unit 110.

Like in the embodiment of Fig. 3, in case a failure is detected in the second telematic unit 210, the second vehicle operational data 215 are forwarded from the second plurality of data sources 220, via the second domain controller 230 to the communication interface 300 and subsequently to the first telematic unit 110 to be further forwarded the external entity 50.

All other functions can be implemented as in the embodiments described before. Therefore, as in the other embodiment, no vehicle operational data are lost, even though a failure has occurred in one of the telematic units 110, 210.

**Fig. 5** depicts a system of data forwarding to the external entity 50 according to yet another embodiment, where the second domain controller 230 includes the second telematic unit 210 as integrated component (e.g. in a common housing). Otherwise, it has the same functionality as the embodiment of Fig. 4. Again, the first and/or the first vehicle operational data 115, 215 can be received by the first telematic unit 110 and/or by the second domain controller 230 with the integrated second telematic unit 210 again using a wireless and/or wired communication. Likewise, the data exchange between the first and second vehicle 110, 200 can be performed using the wireless and/or the wired communication link. The first and/or the first vehicle operational data 115, 215 can be provided again by the plurality of first and second data sources 120, 220.

If a failure is detected, e.g., for the integrated second telematic unit 210, the system may transmit the second vehicle operational data 225 to the first telematic unit 110 again via the communication interface 300. For this, the wired connection links 320, 310 can be utilized. Alternatively, or additionally, the wireless communication interfaces can be used to exchange the vehicle operational data 115, 215.

Here and in the previous embodiments, the failure can also involve the control unit or domain controller so that the data forwarding may be blocked. In this case, the first or second vehicle operational data 115, 215 can be transmitted to the respective other telematic unit 115, 215 utilizing the wireless communication. For example, data from the plurality of second/first data source 220, 210 can be transmitted wirelessly directly to the correctly operating telematic unit.

All other functions can be implemented as in the embodiments described before.

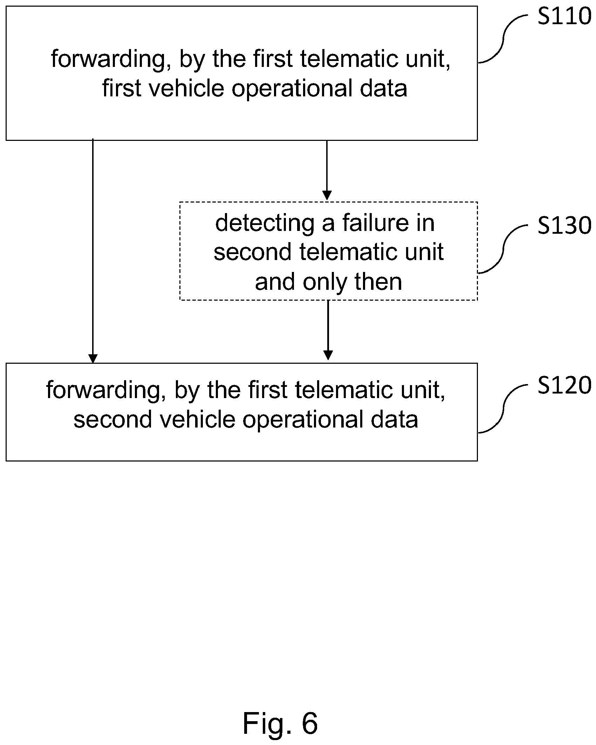

**Fig. 6** depicts a flow diagram of a method for data forwarding (e.g., during automated driving) of a vehicle combination. The vehicle combination includes a first vehicle 100 and a second vehicle 200, the first vehicle 100 includes a first telematic unit 110 and the second vehicle 200 includes the second telematic unit 210. The method includes the steps of:
- forwarding S110, by the first telematic unit 110, first vehicle operational data 115 of the first vehicle 100 to an external entity 50; and
- forwarding S120, by the first data telematic unit 110, second vehicle operational data 215 of the second vehicle 200 to the external entity 50,
wherein, optionally, the last step of forwarding S120 is only carried out if the step of
- detecting S130 a failure in the second telematic unit 210
indicates a failure.

This method may also be a computer-implemented method. A person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

All embodiments may thus provide a redundant data forwarding for a vehicle combination without the need to install new hardware - at least if each vehicle has its own telematic unit available.

Various (common) aspects of embodiments can be summarized as follow:
The telematic units 110, 210 can be implemented as stand-alone devices (see Fig. 1 to Fig. 3) or can be integrated into a control unit 230 (e.g., a domain controller) as illustrated in Fig. 5. For this, any other electronic control unit, ECU, of the vehicles can be utilized. As described with Fig. 1 and fig. 2, for example, the communication between the telematic unit units 110, 210 in the vehicle combination can be through a direct or indirect communication link, for example over a domain or a gateway electronic control unit 130, 230 of the respective vehicles 100, 200.

Telematic units 110, 120 may be set up on vehicles 100, 200 as standalone devices without any redundant pair on the same vehicle because they are (usually) not including safety critical functions. However, for automated driving, the functions of a telematic unit 110, 120 could become more important for the operation of a vehicle 100, 200 or vehicle combination.

According to the described embodiments, if no failure has been detected, a normal operation is performed, where all telematic unit units 110, 210 collect and/or provide the collected data 115, 215 to other vehicle components, e.g., via their wireless/wired communication protocol.

Therefore, according to embodiments, for at least two vehicles 100, 200 in a vehicle combination which are equipped by a telematics unit 110, 120, they can provide redundancy to each other. This increases the availability of a fully functional vehicle combination.

The communication between the telematics units 110, 120 can be direct or it can be indirectly over some (domain) ECUs 130, 230 of the vehicles 100, 200, which is gatewaying the communication inside the vehicle 100, 200.

The exemplary domain electronic control units (or domain controller 130, 230) of the vehicle can send the data through a connection that is established among the vehicle components 100, 200. From here, the data can be directly sent to the other vehicle's telematic unit 110, 210 or it can be sent to the domain electronic control unit 130, 230 of the other vehicles or to both simultaneously.

According to further embodiments, in case of the failure of any of the telematic units 110, 120, the data can be collected by the domain ECU 130, 230 of the given vehicle 100, 200, and the data can be sent to the other vehicle's telematic unit 120, 110, which can upload it to an exemplary cloud server or any other external entity 50.

In case of normal operation (no failure) all telematic units 110, 120 transmit their data via external wireless communication. The vehicle combination may comprise a wired or wireless communication line among the telematic units 110, 120. Alternatively, or additionally, the telematic units 110, 120 may be connected only through domain controllers 130, 230 of each vehicle 100, 200. The state of each telematics unit 110, 120 can be shared. The communicated information can be customizable such as only a few (textual) signals are shared up to video streams.

If a failure is detected in any of the telematic units 110, 120, the data is sent to the other vehicle's telematics unit 120, 110 so that it can upload it to a cloud server 50. A gatewaying (domain) ECU 130, 230 of the vehicle(s) 100, 200 can send the data through a connector or communication interface 300 formed between the vehicles 100, 200. From here, the data can be directly sent to the other vehicles telematics unit 110, 120 or it can be sent over another gatewaying (domain) ECU 130, 230 of the other vehicle 100, 200 (or both simultaneously).

According to an embodiment, the failure of the telematics units 110, 120 can be detected by different means. For example, the telematic units 110, 210 may send a status message that states a failure, or a domain ECU 130, 230 may monitor the telematics unit 110, 120 and detects its failure.

A further redundancy level can be achieved by a redundant gatewaying (domain) ECU 130, 230 of the vehicle 100, 200 in case of double failure (telematics unit 110, 120 and the primary domain ECU 130, 230). Or, in case of the common failure of the telematics unit 110, 120 in one of the vehicles 100, 200 and a failure of the domain ECU 230, 130 on the other vehicle: The data may be collected and forwarded by the first vehicle's domain ECU 130 and directly sent to the telematics unit 120 of the second vehicle 200 (or vice versa).

According to a further embodiment, the TU 110, 120 is integrated into a gatewaying (domain) controller 130, 230 or represents a separate component.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 50: external/remote entity (cloud, remote server, other vehicle)
- 100: first vehicle
- 110: first telematic unit
- 115: first vehicle operational data
- 120: first data source(s)
- 130: first domain controller
- 200: second vehicle
- 210: second telematic unit
- 215: second vehicle operational data
- 220: second data source(s)
- 230: second domain controller
- 300: communication interface
- 310, 320: wired communication links

## Claims

1. A method for providing redundancy for a telematic unit (110, 120) of a vehicle combination, where the vehicle combination includes a first vehicle (100) and a second vehicle (200), the first vehicle (100) includes a first telematic unit (110) and the second vehicle (200) includes a second telematic unit (210),
**characterized by**
- forwarding (S110), by the first telematic unit (110), first vehicle operational data (115) of the first vehicle (100) to an external entity (50);
- forwarding (S120), by the first data telematic unit (110), second vehicle operational data (215) of the second vehicle (200) to the external entity (50).

2. The method of claim 1,
**characterized by**
- forwarding, by the second telematic unit (210), the second vehicle operational data (215) of the second vehicle (200) to the external entity (50); and
- forwarding, by the second telematic unit (210), the first vehicle operational data (115) of the first vehicle (100) to the external entity (50).

3. The method according to claim 1 or claim 2,
**characterized in that**
- providing functions of the second telematic unit (120) by the first telematic unit (110); or
- providing functions of the first telematic unit (110) by the second telematic unit (120),
wherein the provided functions of the first telematic unit (110) and/or the second telematic unit (120) are at least one of the following functions: providing a data gateway, supporting a tracking of the vehicle, vehicle tour analysis, vehicle diagnosis, providing a warning system, providing data protection, or a providing rescue service.

4. The method according to one of the preceding claims,
**characterized by:**
- detecting (S130) a failure in one of the first and second telematic units (110, 210); and
- only when the failure has been detected in the second telematic unit (210), forwarding (S142) the second vehicle operation data (215) by the first telematic unit (110); and/or
- only when the failure has been detected in the first telematic unit (110), forwarding (S144) the first vehicle operation data (115) by the second telematic unit (210).

5. The method according to claim 4,
**characterized in that**
the step of detecting the failure includes:
- ascertaining an absence of a keepalive signal or receiving of a failure signal or receiving of a status message indicating a malfunctioning; and
- collecting first or second vehicle operational data (115, 125) from the vehicle (100, 200) with the detected failure by the telematic unit (110, 120) without a failure.

6. The method according to one of the preceding claims, wherein the first vehicle (100) includes a first domain controller (130) coupled to the first telematic unit (110) and configured to collect and to forward first vehicle operational data (115), and/or the second vehicle (200) includes a second domain controller (230) coupled to the second telematic unit (120) and configured to collect and to forward second vehicle operational data (215),
**characterized by** further comprising at least one of the following steps:
- exchanging the first vehicle operational data (115) and/or the second vehicle operational data (215) between the first domain controller (130) and the second domain controller (230) utilizing a wireless or wired connection,
- exchanging the first vehicle operational data (115) and/or the second vehicle operational data (215) directly between by the first telematic unit (110) and the second telematic unit (120) utilizing a wireless or wired connection, or indirectly utilizing a communication interface (300) between the first vehicle (100) and the second vehicle (200),
- collecting the first vehicle operational data (115) and the second vehicle operational data (215) by the first or second domain controller (130, 230) which is flawless if the other indicates a failure.

7. A system for data forwarding of a first vehicle (100), the system includes a first telematic unit (110) configured to forward first vehicle operational data (115) of the first vehicle (100), the first vehicle (100) forms with a second vehicle (200) a vehicle combination,
**characterized by**
a control unit (130) configured:
- to control forwarding the first vehicle operational data (115) of the first vehicle (100) by the first telematic unit (110) to an external entity (50); and
- to control forwarding the second vehicle operational data (215) of a second vehicle (200) by the first telematic unit (110) to an external entity (50).

8. The system according to claim 7,
**characterized in that**
the control unit (130) is configured:
- to detect a failure of a second telematic unit (210) in the second vehicle (200);
- to control forwarding the second vehicle operational data (215) only upon detecting the failure,
wherein, in case the second telematic unit (210) would operate flawless, it would be configured to forward the second vehicle operational data (215) of the second vehicle (200) to the external entity (50).

9. The system according to claim 7 or claim 8, wherein the first vehicle (100) comprises a first domain controller and/or the second vehicle (200) comprises a second domain controller, the domain controllers are adapted to provide at least one function independent from forwarding vehicle operational data (115, 215),
**characterized in that**
the first telematic unit (110) and/or first control unit (130) is/are integrated in the first domain controller;
the second telematic unit (210) and/or second control unit (230) is/are integrated in the second domain controller.

10. The system according to any one of claims 7 to 9,
**characterized in that**
the first vehicle (100) is a towing vehicle or a towed vehicle; and
the second vehicle (200) is another towing vehicle or another towed vehicle.

11. A vehicle combination with at least two coupled vehicles (100, 200), **characterized by:**
- a system for data forwarding according to one of claims 7 to 10 implemented in one or both vehicles (100, 200) of the vehicle combination.

12. A vehicle combination according to claim 11,
**characterized by:**
a communication interface (300) for exchanging vehicle operational data (115, 215) collected by respective telematic units (110, 210) between both vehicles (100, 200).

13. Computer-readable storage device with stored program code that causes the system of data forwarding according to claim 7 to carry out the method according to claim 1.
